Europäisches Patentamt

European Patent Office

Office européen des brevets

(11) Veröffentlichungsnummer: **0 061 995**

**A1**

(12) **EUROPÄISCHE PATENTANMELDUNG**

(21) Anmeldenummer: **82810105.5**

(51) Int. Cl.³: **A 22 C 11/02**

(22) Anmeldetag: **11.03.82**

(30) Priorität: 26.03.81 CH 2068/81

(43) Veröffentlichungstag der Anmeldung:
06.10.82 Patentblatt 82/40

(84) Benannte Vertragsstaaten:
AT BE CH DE FR GB IT LI LU NL SE

(71) Anmelder: C. Hoegger & Cie. AG
Ringstrasse
CH-9202 Gossau(CH)

(72) Erfinder: Geissbühler, Hans
Sonnenbergstrasse 14
CH-9524 Zuzwil(CH)

(74) Vertreter: Schmid, Rudolf et al,
c/o ISLER & SCHMID Patentanwaltsbureau
Walchestrasse 23
CH-8006 Zürich(CH)

(54) Portioniereinrichtung für Wurstmasse.

(57) Die Einrichtung zum Portionieren einer Wurstmasse ist mit einem druckerzeugenden Fördermittel (2) versehen. Dieses transportiert die Wurstmasse (4) von einem Vorratsbehälter (1) in eine Stopfrohr (6), vor welchem ein Vershlussorgan (13) angeordnet ist zur periodischen Unterbrechung des Massenstromes. Zwischen dem Verschlussorgan (13) und dem Fördermittel (2) ist eine volumetrische Messeinrichtung (8) angeordnet, die vom Massenstrom selber angetrieben ist. Die Signale der Messvorrichtung (8) werden in eine elektronisches Steuergerät (27) eingegeben, welches das Oeffnen und Schliessen des Verschlussorganes (13) regelt, in Abhängigkeit vom gemessenen Wurstvolumen. Durch klare Trennung der verschiedenen Funktionen Druckerzeugung, volumetrische Messung, Unterbrechung des Massenstromes können die Elemente optimal ausgelegt werden, was konstruktive und betriebliche Vorteile mit sich bringt.

Fig. 1

2. März 1981   RS/kh

"Portioniergerät BM"

C. HOEGGER & CIE. AG

9202   Gossau


B E S C H R E I B U N G


Portioniereinrichtung für Wurstmasse


Die Erfindung betrifft eine Portioniereinrichtung für eine Wurstmasse gemäss dem Gattungsbegriff des Patentanspruches 1.

Aus der DE-PS 1.432.513 ist eine kontinuierlich arbeitende Wurstfülleinrichtung bekannt, bei welcher die Wurstmasse mittels einer Fördereinrichtung von einem Vorratsbehälter, z. B. einem Einfülltrichter, in den Abfüllstutzen für die Würste transportiert wird. Die durch einen
Elektromotor angetriebene Fördereinrichtung weist einen
Rotor mit radialen Schlitzen auf, in welchen Schieber
zwangsläufig derart geführt sind, dass ihre Enden ständig
an der Innenwand des Rotorgehäuses anliegen.

Die Fördereinrichtung erzeugt den Druck für den
Brättransport, wobei der Drehwinkel zwischen zwei Positionen
ein Mass ist für die ausgestossene Portion. Zum Portionieren
wird der Drehwinkel des Rotors elektronisch oder mechanisch
geregelt.

Andere kontinuierlich arbeitende Fülleinrichtungen weisen Zahnrad- oder Schneckenförderer (DE-AS 11 32 464)
auf. Diese kontinuierlich arbeitenden Fülleinrichtungen sind
aber mit verschiedenen Nachteilen behaftet. Das Fördersystem muss massiv sein, damit z. B. Rohwurst gefördert
werden kann. Dabei müssen Drücke bis z. B. 20 bar erzeugt
werden, was ein entsprechendes Antriebsmoment erfordert.
Die massive Bauweise ist bezüglich der Beschleunigung ungünstig, was bei Stückzahlen von über 200 Portionen/Minute zur Auswirkung kommt. Neben der massiven Bauweise müssen
die Fördersysteme gross dimensioniert sein, so dass die
Portioniereinrichtung als Ganzes sehr voluminös ist.
Schliesslich kann bei dünnflüssiger Wurstmasse "Schlupf"
auftreten; um dies zu verhindern, müssen in der
Fabrikation sehr enge Toleranzen eingehalten werden, was
eine Verteuerung mit sich bringt.

Ein weiteres bekanntes Portioniersystem, das von
der Anmelderin hergestellt und vertrieben wird, ist mit
einem Brätkolben ausgerüstet, der die Brätmasse unter
Druck setzt und über einen Kanal einem in einer drehbaren
Büchse angeordneten Portionier-Doppelkolben zuführt, welcher quer zum Kanal angeordnet ist. Der Portionier-Doppelkolben besitzt zwei Funktionen: Er dient sowohl zum Messen
des Brätvolumens wie auch zum Ausstossen desselben. Die
Hübe des Kolbens werden dabei durch die unter Druck stehende zufliessende Brätmasse bewerkstelligt. Bei anderen
Kolbenfüller-Portioniersystemen kann das Ausstossen der
Portionen auch mechanisch oder hydraulisch erfolgen. Bei
diesen Portioniersystemen mit Brätkolben ist der Portionierbereich eingeschränkt, da er von der Hublänge und dem Kol-

- 4 -

bendurchmesser des Brätkolbens abhängig ist. Die Systeme sind zwar relativ genau, aber von der Handhabung her veraltet.

Beim Kolbenfüller-Portioniersystem gemäss der EU-A1-13552 ist ebenfalls ein Brätkolben zur Erzeugung des Brätförderdruckes vorgesehen. Die Portionierung der Brätmasse erfolgt mit dem Brätkolben selbst, dessen Hub elektronisch überwacht wird. Vor dem Ausstossrohr kann noch ein Schieber eingebaut sein, um den Brätstrom zu unterbrechen. Dieses System ist aber ungenau, weil die Wurstmasse Gas enthält und somit kompressibel ist. Dadurch ist die Kolbenbewegung nicht proportional der ausgestossenen Masse, insbesondere nicht bei grossen Brätvolumen und kleinen Portionen.

Aufgabe der Erfindung ist es, die Nachteile der vorstehend erwähnten, bekannten Portioniereinrichtungen zu vermeiden. Erfindungsgemäss erfolgt dies durch die im kennzeichnenden Teil des Anspruches 1 aufgeführten Merkmale.

Durch die Erfindung wird eine klare Unterteilung nach den Funktionen der einzelnen Elemente erzielt, und zwar Druckerzeugung, volumetrisches Messen, periodisches Unterbrechen des Massenstromes.

Dies hat folgende wesentliche Vorteile:

Der Druck für den Massenstrom kann durch irgendein druckerzeugendes Fördermittel, z. B. eine Schieberpumpe oder eine Kolbenvorrichtung, erhalten werden. Die volumetrische Messeinrichtung misst den effektiven Volumenstrom in der Nähe des Brätaustrittes. Da die Messeinrichtung, die zweckmässigerweise aus einem Rotor mit darin zwangsläufig radial geführten Schiebern besteht, nur das Moment für den Antrieb eines Impulsmessers für die elektronische Steuerung und zur Ueberwindung der Reibung liefern muss, ist nur ein kleiner Druckunterschied im Brätstrom notwendig. Aus diesem Grund kann der Antrieb des Rotors durch den Brätstrom selber erfolgen, und es müssen keine separaten Antriebe vorgesehen sein. Ferner sind minimale Schieber in Anzahl und Grösse notwendig. Da praktisch kein Schlupf entsteht, sind die konstruktiven und fabrikatorischen Anforderungen klein. In der Praxis hat es sich gezeigt, dass der Rotordurchmesser wesentlich kleiner ausgeführt werden kann im Vergleich zu bekannten, direkt angetriebenen Schieberpumpen. Die Grösse der Portionen ist an keine Bedingung geknüpft, da ein beliebig grosses Massenvolumen gemessen werden kann.

Nachfolgend werden anhand der Zeichnungen Ausführungsbeispiele der Erfindung näher erläutert. Es zeigen:

Fig. 1    einen Querschnitt durch eine Portioniereinrichtung mit einem Kolben als druckerzeugendes Fördermittel,

Fig. 2    einen Ausschnitt aus Fig. 1, wobei das Verschlussorgan in geschlossener Stellung gezeigt ist,

Fig. 3    zwei Portionierstationen, bestehend je aus einer volumetrischen Messvorrichtung und einem Verschlussorgan, wobei die Portionierstationen von einer gemeinsamen Brätpumpe versorgt werden,

Fig. 4 + 5    zwei Steuerungsdiagramme,

Fig. 6    einen Querschnitt durch einen Rotor mit Schiebern,

Fig. 7    eine Ansicht eines Schiebers.


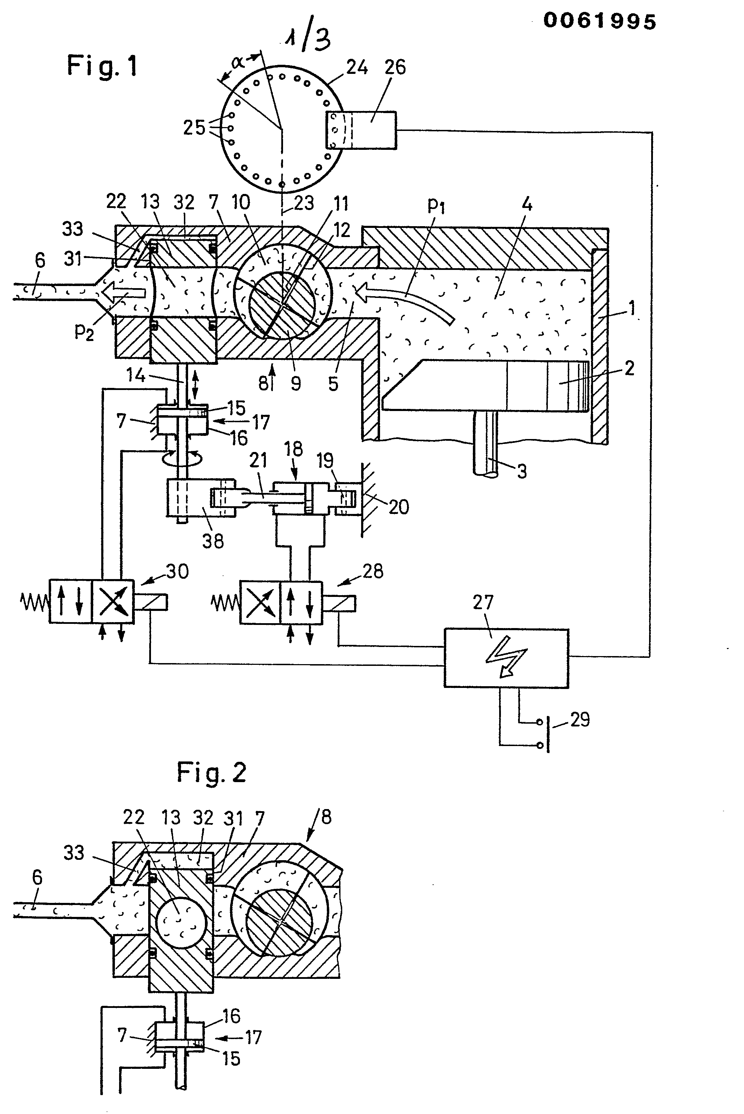

Die in den Figuren 1 und 2 dargestellte Portioniereinrichtung weist einen Brätzylinder 1 auf, in welchem
ein Brätkolben 2 angeordnet ist, der über eine Kolbenstange 3 in nicht näher dargestellter Weise mit einem Antriebsorgan, z. B. einem Hydraulikantrieb, verbunden ist. Der
Kolben 2 erzeugt in der Brätmasse 4 ein Druck $p_1$, welcher
bewirkt, dass die Brätmasse durch den Kanal 5 in das Füllrohr 6 gefördert wird, von wo es in die Wursthülle gelangt.


Im Gehäuse 7 der Portioniereinrichtung ist eine
Messvorrichtung 8 angeordnet, die einen Rotor 9 aufweist,
welcher in einer zylindrischen Messkammer 10 untergebracht
ist, die quer zum Zuführungskanal 5 bzw. zum Brätstrang
ausgerichtet ist.


Die Messvorrichtung ist nach dem Prinzip einer
Schieberpumpe ausgebildet, wie z. B. in der DE-PS 1.432.513
beschrieben. Im Rotor 9 sind radiale Schlitze 11 ausgespart, in denen die vier Schieber 12 geführt sind. Letztere
werden durch eine Schieberführung zwangsläufig so gesteuert, dass sie stets nach aussen an die Kammerwandung gedrückt werden.

Im Anschluss an die Messvorrichtung 8 befindet sich im Gehäuse 7 ein zylindrisches Schieberlement 13, welches wiederum quer zum Brätkanal 5 angeordnet ist. Das Schieberelement 13 dient dazu, den Massenstrom periodisch zu unterbrechen. Es ist über eine Stange 14 mit einem Hydraulikkolben 15 in einem Hydraulikzylinder 16 verbunden. Diese erste Kolben/Zylindereinheit 17 dient dazu, den Hub des Schieberelementes 13 zu regulieren.

Eine weitere hydraulische Kolben/Zylindereinheit 18 ist gelenkig 19 mit einem Gehäuseteil 20 verbunden, und ihre Kolbenstange 21 wirkt auf einen Kurbelantrieb 38 ein, der dazu dient, die Stange 14 bzw. das Schieberelement 13 um 90° zu verdrehen, wodurch die Durchlassbohrung 22 des letzteren nicht mehr mit dem Brätkanal 5 fluchtet und der Massenstrom unterbrochen wird.

Auf der Rotorachse 23 sitzt eine Impulsgeberscheibe 24, welche vom Rotor 9 angetrieben wird. Der Rotor

- 9 -

9 seinerseits wird vom Brätstrom angetrieben und dreht sich synchron mit diesem. Die Antriebsleistung und die Reibung verursachen eine kleine Druckdifferenz $\Delta p$ zwischen dem Brätdruck $p_1$ im Brätzylinder und dem Brätdruck $p_2$ im Füllrohr 6.

Ueber den Umfang der Impulsgeberscheibe 24 ist eine Anzahl Vorsprünge 25 gleichmässig verteilt, welche im Impulsmesser 26 entsprechende Signale auslösen, die an die elektronische Steuerung 27 übermittelt werden. Wenn die vorgewählte Impulszahl (die einem bestimmten Drehwinkel $\alpha$ des Rotors entspricht) erreicht wird, schaltet die Elektronik 27 das Hydraulikventil 28 der zweiten Kolben/ Zylindereinheit 18, so dass das Schieberelement 13 geschlossen wird. Der Wurststrang wird unterbrochen, damit z. B. bei der Darmhülle ein Clip gesetzt werden kann oder eine Abdrehung der Darmhülle erfolgen kann.

Nach der Pause wird die Elektronik wieder auf "0" gesetzt, und das Schieberelement 13 wird geöffnet, damit die nächste Brätportion abgefüllt werden kann.

- 10 -

Die Steuerung ist so ausgelegt, dass, wenn der Hauptschalter 29 geöffnet wird, zuerst die angefangene Portion normal durchgelassen wird und anschliessend das Schieberelement 13, wie vorgehend beschrieben, geschlossen, jedoch nach der Pause nicht mehr geöffnet wird. Nach der Pause, wenn nicht mehr gestartet wird, aktiviert die Elektronik 27 das Schaltventil 30, so dass der Hydraulikkolben 15 in seine andere Anschlagposition fährt und das Schieberelement 13 teilweise aus der Schieberführung 31 herauszieht. Dadurch wird in der Schieberführung 31 ein Druckausgleichraum 32 freigegeben.

Die im Füllrohr 6 vorhandene, unter dem Druck $p_2$ stehende Wurstmasse wird über die Verbindungsleitung 33 und den Raum 32 entspannt. Durch diesen Brätrückzug wird verhindert, dass bei längeren Betriebsunterbrüchen Wurstmasse aus dem Füllrohr 6 ausfliesst.

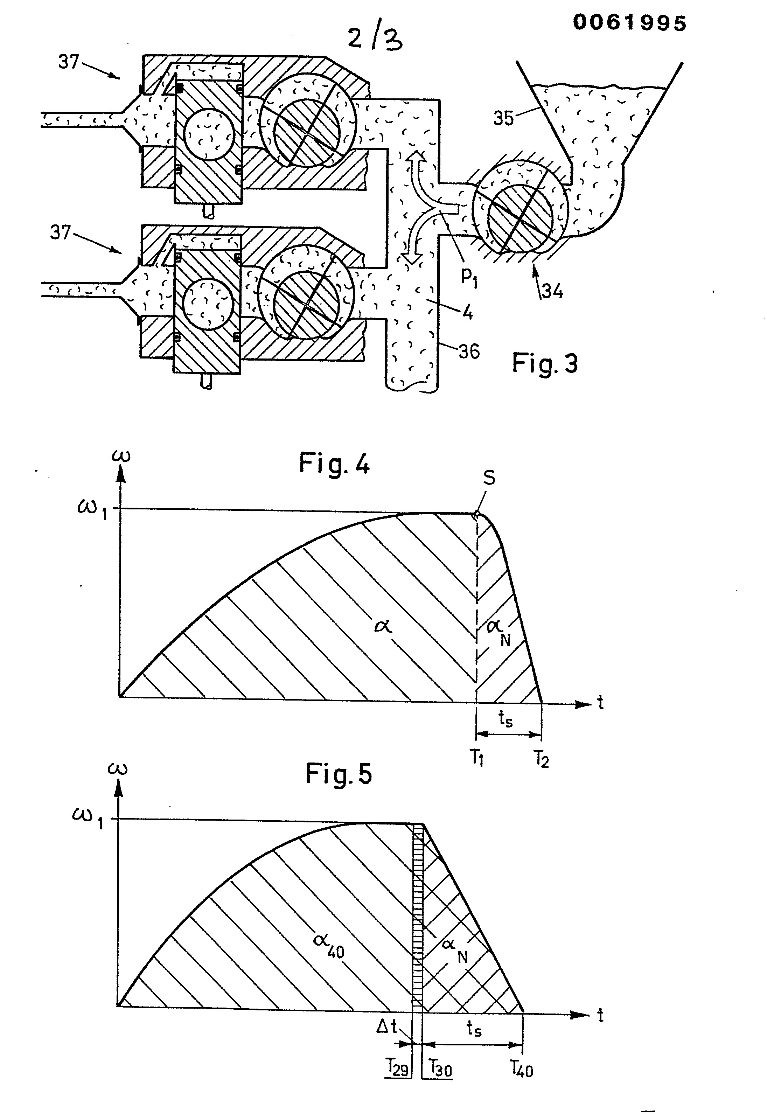

Beim Ausführungsbeispiel gemäss der Figur 3 wird anstelle des Brätkolbens eine kontinuierlich arbeitende Schieberpumpe 34 eingesetzt, die von einem Einfülltrichter 35 gespeist wird. Die unter dem Druck $p_1$ stehende Brätmasse

4 kann über die gemeinsame Förderleitung 36 mehreren Portionierstationen 37 zugeführt werden, die je ein Abschlussorgan und eine Messvorrichtung aufweisen. Selbstverständlich wäre es möglich, zur Erzeugung des Druckes für den Massenstrom auch andere, an sich bekannte Fördermittel zu verwenden, z. B. Zahnrad- oder Schneckenpumpen.

Bei der Steuerung entspricht die Portion nicht der gewählten, durch den Winkel $\alpha$ in der Figur 1 definierten Impulszahl, sondern einem Winkel $\alpha + \alpha_N$. Dies geht aus dem Steuerungsdiagramm gemäss Figur 4 hervor, wo die Ordinate mit der Winkelgeschwindigkeit $\omega$ angeschrieben ist und die Abszisse die Zeitachse t darstellt.

Der Schliessvorgang S wird zum Zeitpunkt $T_1$ eingeleitet, bei einer Winkelgeschwindigkeit $\omega_1$, und ist zum Zeitpunkt $T_2$ beendet, wobei die Schliesszeit $t_s$ bezeichnet sei. $\alpha_N$ entspricht der Impulszahl bzw. der Durchflussmenge während des Schliessens. Bei gleichbleibendem, bekanntem Druckverhalten ist die Winkelgeschwindigkeit $\omega_s$ während des Schliessvorganges als Funktion der Schliesszeit jeweils gleich, so dass bei gleicher Zeit $t_s$ $\alpha_N$ konstant ist und

entsprechend berücksichtigt werden kann, um eine gewünschte Portion bzw. Füllmenge zu erhalten.

Bei Anwendungsfällen, wo der Nachlauf $\alpha_N$ genau definiert sein muss, wird wie folgt vorgegangen (Diagramm gemäss Figur 5):

Die Portion soll z. B. 40 Impulsen der Geberscheibe entsprechen bzw. dem Winkel $\alpha_{40}$. Der Nachlaufwinkel $\alpha_N$ muss in $\alpha_{40}$ enthalten sein. Der Steuerrechner wird nun so programmiert, dass z. B. immer die letzten 10 Impulse während des Schliessens des Schieberelementes 13 erfolgen sollen, d. h. das Schliessen wird beim Impuls 30 eingeleitet.

Zwischen dem Impuls 29 und dem Impuls 30 wird die Zeit $\Delta t$ gemessen. Der Winkel $\Delta\alpha$ zwischen dem Impuls 29 und dem Impuls 30 ist von der Konstruktion der Geberscheibe aus gegeben. Daraus kann die Winkelgeschwindigkeit $\omega s$ berechnet werden, nämlich $\omega s = \Delta\alpha \div \Delta t$.

Mit der Winkelgeschwindigkeit $\omega s$ und dem Schliess-

winkel $\alpha_N$ kann die Schliesszeit $t_s$ berechnet werden:

$$t_s = 2\alpha_N \div \omega s.$$

Innerhalb der Zeit $t_s$ wird nun das Schieberelement 13 mittels Linearverstärker geschlossen. So ergibt
sich auch bei verschiedenen Drücken bzw. Ausfliessgeschwindigkeiten bzw. Winkelgeschwindigkeiten der Geberscheibe
immer der gleiche Schliessweg bzw. während des Schliessens
vom Schieberelement 13 fliesst immer das gleiche Brätvolumen durch den Schieber.

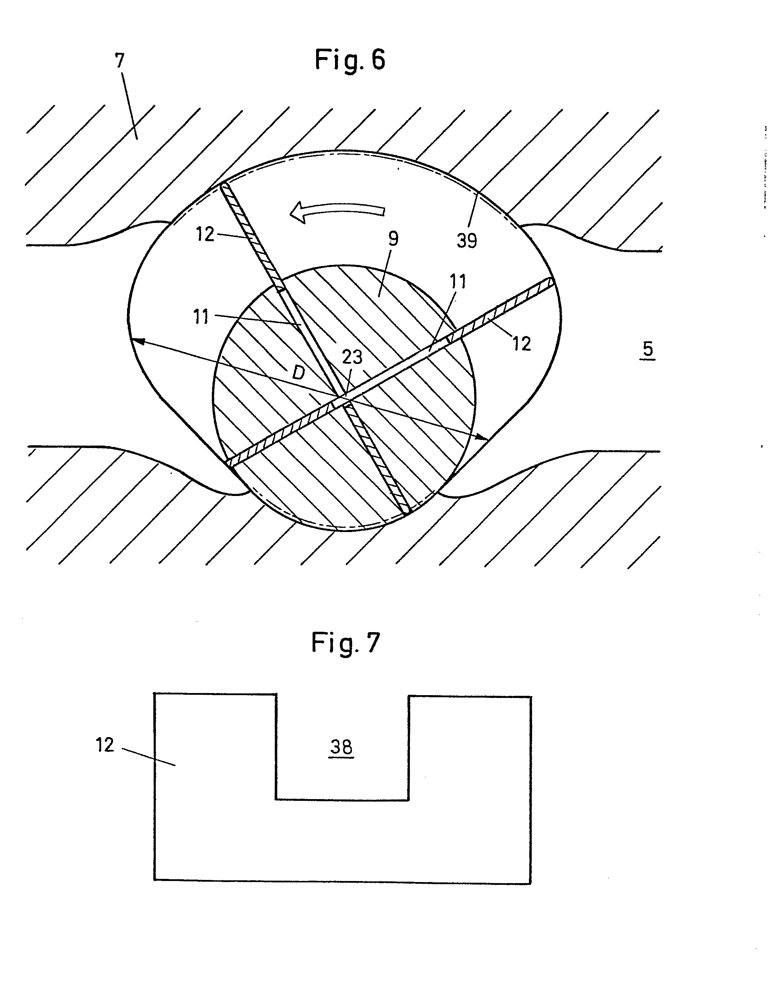

Bei der Ausführungsform des Rotors 9 gemäss
Figur 6 sind zwei Schieber 12 vorgesehen, die sich wechselweise kreuzen. Die Schieber, die je eine Aussparung 38 aufweisen, greifen dabei ineinander. Die Innenwandung 39 der
Rotorkammer ist nach einer Kurve so gekrümmt ausgebildet,
dass der durch die Rotorachse 23 gehende Durchmesser D konstant bleibt bei allen Drehwinkellagen des Rotors. Diese
Ausführungsform des Rotors lässt sich fabrikationstechnisch
preisgünstig herstellen. Die Kammerwandung muss nur im
strichpunktiert eingezeichneten Bereich genau sein, d. h.
eine enge Toleranz aufweisen.

2. März 1981    RS/kh

"Portioniergerät BM"

<u>C. HOEGGER & CIE. AG</u>

9202   Gossau


P A T E N T A N S P R Ü C H E

1.    Einrichtung mit mindestens einer Portionierstation
zum Portionieren einer Wurstmasse oder dgl., wobei
ein druckerzeugendes Fördermittel vorgesehen ist, um
die Wurstmasse von einem Vorratsbehälter in ein Stopfrohr der Portionierstation zu transportieren, und wobei vor dem Stopfrohr ein Verschlussorgan angeordnet
ist zur periodischen Unterbrechung des Massenstromes,
dadurch gekennzeichnet, dass zwischen dem Verschlussorgan (13) und dem Fördermittel (2) eine volumetrische
Messeinrichtung (8) angeordnet ist, die vom Massenstrom angetrieben ist, und dass die Signale der Messvorrichtung (8) an ein elektronisches Steuergerät (27)
übermittelbar sind, welch  letzteres das Oeffnen bzw.

Schliessen des Verschlussorganes (13) bewirkt in Abhängigkeit des gemessenen Wurstvolumens.

2. Einrichtung nach Anspruch 1, dadurch gekennzeichnet,
dass die Messvorrichtung (8) unmittelbar vor dem Verschlussorgan (13) angeordnet ist.

3. Einrichtung nach Anspruch 1, dadurch gekennzeichnet,
dass die Messvorrichtung (8) nach dem Prinzip einer
Schieberpumpe ausgebildet ist, wobei sie einen Rotor
(9) mit radialen Schlitzen (11) aufweist, in welchen
mehrere Schieber (12) gelagert sind, die durch eine
Führung zwingend so gesteuert sind, dass ihre Enden
nach aussen an die Innenwandung der Rotorkammer
(10) gedrückt sind.

4. Einrichtung nach Anspruch 1, dadurch gekennzeichnet,
dass die volumetrische Messvorrichtung (8) mit einem
Impulsmesser (24) verbunden ist, dessen Signale an
die elektronische Steuerung (27) übermittelt werden.

5. Einrichtung nach den Ansprüchen 3 und 4, dadurch gekennzeichnet, dass der Impulsmesser aus einer Impulsgeberscheibe (24) besteht, die fest auf der Rotorwelle (23) sitzt.


6. Einrichtung nach Anspruch 1, dadurch gekennzeichnet,
dass das Verschlussorgan als zylindrisches Schieberelement (13) ausgebildet ist und quer zum Massenstrom
in einer Ausnehmung (31) des Gehäuses (7) der Portioniereinrichtung untergebracht ist.


7. Einrichtung nach Anspruch 6, dadurch gekennzeichnet,
dass das mit einer Querbohrung (22) versehene Schieberelement (13) um seine Achse (14) drehbar ist und
in Richtung dieser Achse hin und her beweglich ist.


8. Einrichtung nach Anspruch 7, dadurch gekennzeichnet,
dass im Bereich des Bodens der Ausnehmung (31) ein
Verbindungskanal (33) mündet, der den bei Rückzug des
Schieberelementes (13) entstehenden Druckausgleichraum (32) mit dem Stopfrohr (6) verbindet.


9. Einrichtung nach Anspruch 1, gekennzeichnet durch mehrere Portionierstationen, die je ein Verschlussorgan (13) und eine volumetrische Messvorrichtung (8)
aufweisen, denen ein gemeinsames druckerzeugendes
Fördermittel vorgeschaltet ist.

10. Einrichtung nach Anspruch 3, dadurch gekennzeichnet,
    dass der Rotor (9) zwei gekreuzt angeordnete Schieber
    (12) aufweist, die je mit einer Aussparung (38) versehen sind und ineinandergreifen, und dass die Innenwandung der Rotorkammer nach einer Kurve derart gekrümmt ausgebildet ist, dass der durch die Rotorachse
    (23) gehende Kammerdurchmesser (D) in allen Drehwinkellagen konstant ist (Fig. 6).

Fig. 1

Fig. 2

0061995

2/3

0061995

Fig. 3

Fig. 4

Fig. 5

## Fig. 6

## Fig. 7

## EUROPÄISCHER RECHERCHENBERICHT

Europäisches
Patentamt

### EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| A | DE-A-1 432 504 (FREY)<br>* Seite 8, Zeile 23 - Seite 11, Zeile 20 *<br><br>--- | 1 | A 22 C 11/02 |
| P,X | WO-A-8 103 259 (HANDTMANN)<br><br>* Insgesamt * & DE - A - 3 018 793<br><br>--- | 1,2,4, 6,7 | |
| A | DE-C- 54 866 (BAUERLEIN-GERMANN)<br>* Insgesamt *<br><br>--- | 3,10 | |
| A | US-A-3 207 368 (RUNGE)<br>* Spalte 3, Zeilen 6-19 *<br><br>--- | 4 | |
| A | EP-A-0 019 711 (VEMAG)<br>* Seite 8, Zeile 22 - Seite 9, Zeile 16 *<br><br>--- | 1,9 | RECHERCHIERTE SACHGEBIETE (Int. Cl. 3)<br><br>A 22 C |
| A | EP-A-0 013 552 (HANDTMANN)<br><br>--- | | |
| A | DE-A-2 249 070 (SCHNELL)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 14-06-1982 | DE LAMEILLIEURE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82